# EUROPÄISCHE PATENTSCHRIFT

(11) **EP 3 400 784 B1**
(45) Veröffentlichungstag und Bekanntmachung des Hinweises auf die Patenterteilung: **21.07.2021**
(21) Anmeldenummer: 18152350.7
(22) Anmeldetag: 18.01.2018
(51) Int. Cl.: A01F 12/44

(54) **SIEBEINRICHTUNG FÜR EINE ERNTEMASCHINE SOWIE ERNTEMASCHINE**
FILTER DEVICE FOR A HARVESTER AND HARVESTER
DISPOSITIF FORMANT TAMIS POUR UNE MACHINE DE RÉCOLTE AINSI QU'UNE MACHINE DE RÉCOLTE

(30) Priorität: 09.05.2017 DE 102017109938
(43) Veröffentlichungstag der Anmeldung: 14.11.2018
(73) Patentinhaber: CLAAS Selbstfahrende Erntemaschinen GmbH, 33428 Harsewinkel (DE)
(72) Erfinder: Pölling, Benedikt, 48653 Coesfeld (DE); Holtmann, Bernd, 48324 Sendenhorst (DE); Waack, Johannes, 49326 Melle (DE)
(74) Vertreter: CLAAS Gruppe

(56) Entgegenhaltungen:
- EP-A1- 0 682 860
- EP-A1- 1 238 580
- EP-A1- 1 849 351
- EP-B1- 1 068 792

## Beschreibung

Die vorliegende Anmeldung betrifft eine Siebeinrichtung für eine Erntemaschine, insbesondere für einen Mähdrescher, insbesondere zur Trennung von losen Früchten von Pflanzenresten, die Siebeinrichtung umfassend
- mindestens einen Siebrahmen,
- eine Vielzahl von Lamellen, die an dem Siebrahmen angeordnet sind, sowie
- mindestens eine Stelleinrichtung zur Verstellung von Lamellen,
wobei die Lamellen derart an dem Siebrahmen angeordnet sind, dass sie Durchgangsquerschnitte zum Durchtritt von Material ausgehend von einer Oberseite des Siebrahmens hin zu dessen Unterseite begrenzen, wobei zumindest eine Mehrzahl der Lamellen derart mit der Stelleinrichtung zusammenwirkt, dass Siebstellungen der Lamellen veränderbar sind, wobei die von benachbarten Lamellen begrenzten Durchgangsquerschnitte bei Vorliegen der Lamellen in verschiedenen Siebstellungen unterschiedlich sind, wobei die Stelleinrichtung mindestens einen Motor sowie mindestens ein Übertragungsorgan umfasst, mittels dessen ein Abtriebsmoment des Motors auf die mit der Stelleinrichtung zusammenwirkenden Lamellen übertragbar ist, sodass die Siebstellungen der Lamellen veränderbar sind.

Weiterhin betrifft die vorliegende Anmeldung eine Erntemaschine, insbesondere einen selbstfahrenden Mähdrescher zum Ernten von Getreide, umfassend:
- mindestens ein Schneidwerk zum Schneiden mittels der Erntemaschine zu erntender Pflanzen,
- mindestens ein Förderorgan zur Förderung der geschnittenen Pflanzen,
- mindestens ein langgestrecktes, um eine Rotationsachse drehantreibbares Dreschorgan, sowie
- mindestens eine um eine Rotationsachse drehantreibbare Wendetrommel,
wobei mittels des Förderorgans die geschnittenen Pflanzen zu dem Dreschorgan förderbar sind, wobei mittels des Dreschorgans derart Früchte von den geschnittenen Pflanzen ablösbar sind, dass die Früchte sodann losgelöst von Pflanzenresten der geschnittenen Pflanzen vorliegen, wobei mittels der Wendetrommel ein von dem Dreschorgan ausgehender, sowohl lose Früchte als auch Pflanzenreste enthaltender Materialstrom an mindestens eine nachgeschaltete Siebeinrichtung übergebbar ist, wobei mittels der Siebeinrichtung abgelöste Früchte von Pflanzenresten trennbar sind.

Bei einer "Siebeinrichtung" handelt es sich im Sinne der vorliegenden Anmeldung in aller Regel um ein Mähdreschersieb, das dazu geeignet ist, lose Körner von nicht weiter verwertbaren Pflanzenresten der jeweils geernteten Pflanze zu trennen. Grundsätzlich kann eine Siebeinrichtung mehrere, insbesondere zwei, Siebfelder umfassen. Erntemaschinen umfassen in aller Regel zwei derartige Siebeinrichtungen, die auch als Obersieb und Untersieb bezeichnet werden, sodass ein typischer Mähdrescher in aller Regel insgesamt vier Siebfelder aufweist. Die Siebeinrichtungen sind typischerweise übereinander angeordnet, wobei normalerweise Durchgangsquerschnitte der Siebeinrichtungen unterschiedlich eingestellt sind, ausgehend von grob (Obersieb) nach fein (Untersieb).

Die Siebeinrichtungen werden in aller Regel mittels einer Antriebseinrichtung zyklisch bewegt bzw. "gerüttelt", sodass das zu siebende Material durch die Durchgangsquerschnitte hindurch von einer Oberseite der jeweiligen Siebeinrichtung hin zu dessen Unterseite gefördert wird. Weiterhin wirkt eine solche Siebeinrichtung typischerweise mit einem Gebläse zusammen, dass die Siebeinrichtung von unten nach oben durchströmt und auf diese Weise eine Sichtungsfunktion wahrnimmt. Besonders leichte Bestandteile der nicht verwertbaren Pflanzenreste werden auf diese Weise daran gehindert, durch die Siebeinrichtung hindurch zu fallen.

Der "Siebrahmen" bezeichnet im Sinne der vorliegenden Anmeldung einen Träger, der dazu geeignet ist, zumindest mittelbar die Vielzahl von Lamellen zu tragen. Mit anderen Worten sind die Lamellen zumindest mittelbar an dem Siebrahmen befestigt und wirken auf diese Weise mit selbigen zusammen. Oftmals sind die Lamellen nicht unmittelbar mit dem Siebrahmen gekoppelt, sondern ihrerseits in einem Tragrahmen gelagert, wobei der Tragrahmen unmittelbar mit dem Siebrahmen zusammenwirkt. Bei einem Austausch eines Siebes wird sodann der Siebrahmen als solcher in der Erntemaschine belassen, während der Tragrahmen mitsamt den unmittelbar daran angeordneten Lamellen entnommen wird.

Ferner bezeichnen die "Lamellen" im Sinne der vorliegenden Anmeldung Elemente, die gewissermaßen eine Feinheit der jeweiligen Siebeinrichtung bestimmen. Die Lamellen können insbesondere eine in bekannter Weise langgestreckte, zackenförmige Form aufweisen. Typischerweise werden die Durchgangsquerschnitte der Siebeinrichtung jeweils von benachbarten Lamellen begrenzt, wobei ein Durchgangsquerschnitt unmittelbar von einem lichten Abstand zwischen den benachbarten Lamellen abhängt. Die Lamellen sind in aller Regel beweglich ausgeführt, insbesondere um eine Rotationsachse schwenkbar. Mittels einer Bewegung der Lamellen relativ zueinander können auf diese Weise die Durchgangsquerschnitte der Siebeinrichtung eingestellt werden. Insbesondere ist es in Abhängigkeit der jeweils zu erntenden Frucht notwendig, die Siebeinrichtung mit unterschiedlichen Feinheiten einzustellen. Somit können beispielsweise Raps Körner einen Durchmesser aufweisen, der in etwa dem Durchmesser eines Stecknadelkopfes entspricht, während beispielsweise Maiskörner durchaus Erbsengröße aufweisen können. Die Einstellbarkeit der Siebeinrichtung ermöglicht deren Einsatz für verschiedene Früchte.

Die "Stelleinrichtung" bezeichnet im Sinne der vorliegenden Anmeldung grundsätzlich jede Art von Einrichtung, die dazu geeignet ist, Lamellen der Siebeinrichtung zu verstellen, sodass die vorstehend beschriebene Änderung der Durchgangsquerschnitte der Siebeinrichtung vorgenommen werden kann. Typischerweise wirkt die Stelleinrichtung mittels einer Kombination von translatorischen und rotatorischen Bewegungen auf verschiedene mechanische Übertragungselemente eines Übertragungsorgans ein, die letztlich zu einer Verstellung zumindest eines Teils der Lamellen, vorzugsweise sämtlicher Lamellen, führen.

Die genannten Übertragungselemente bilden im Sinne der vorliegenden Anmeldung gemeinsam das "Übertragungsorgan". Dabei ist es grundsätzlich von nachrangiger Bedeutung, wie viele Übertragungselemente bzw. welche Art von Übertragungselementen das Übertragungsorgan umfasst. Entscheidend ist lediglich die Funktionalität der Übertragung einer mittels des Motors der Stelleinrichtung ausgeübten Stellkraft bzw. eines ausgeübten Stellmoments auf die Lamellen in der Art, dass letztere verstellbar sind. Insbesondere kann das Übertragungsorgan aus einer Gesamtheit von Pendelstäben, Gelenken und Schwenkelementen bestehen.

Siebeinrichtungen der eingangs beschriebenen Art sind im Stand der Technik bereits weitläufig bekannt. Hierzu wird beispielsweise auf die Europäische Patentschrift EP 1 068 792 B1 verwiesen. Diese offenbart eine Erntemaschine, die mit zwei übereinander angeordneten Siebeinrichtungen, nämlich einem Obersieb sowie einem Untersieb, ausgestattet ist. Die Siebeinrichtungen verfügen jeweils über eine Vielzahl von Lamellen, die jeweils gemeinsam Durchgangsquerschnitte der jeweiligen Siebeinrichtung begrenzen. Die Lamellen sind mittels einer Stelleinrichtung verstellbar ausgeführt, sodass die Durchgangsquerschnitte der Siebeinrichtungen verändert werden können. Dabei ist es üblich, jede der Siebeinrichtungen mit einer eigenen zugehörigen Stelleinrichtung auszustatten.

Gemäß dem genannten Dokument ist die Stelleinrichtung einer jeweiligen Siebeinrichtung an deren rückwärtigem Ende angeordnet sowie quer zu einer Längsrichtung der Siebeinrichtung orientiert. Mit anderen Worten ist eine Längsachse der Stelleinrichtung senkrecht zu einer Längsachse der Erntemaschine orientiert. Entsprechend wirkt eine mittels des Motors der Stelleinrichtung bewirkte translatorische Bewegung gleichermaßen quer zu der Längsachse der Erntemaschine. Mittels eines Übertragungsorgans werden diese Bewegungen auf die Lamellen übertragen, die infolgedessen jeweils um eine feste Rotationsachse rotieren. Es ergibt sich, dass die unterschiedlichen rotatorischen Stellungen der Lamellen mit unterschiedlichen Durchgangsquerschnitten korrespondieren, sodass letztlich die gewünschte Verstellbarkeit der Lamellen hergestellt ist.

Der Nachteil des Standes der Technik besteht darin, dass die Stelleinrichtung aufgrund ihrer notwendigen Anordnung in einen Strömungsquerschnitt der abgeschiedenen Pflanzenreste hineinragt. Letztere können die jeweilige Siebeinrichtung wunschgemäß nicht durchdringen und werden entsprechend oberseitig der Siebeinrichtung in einen rückwärtigen Bereich der Erntemaschine ausgetragen. Dort werden sie durch eine Auswurföffnung aus der Erntemaschine ausgeworfen. Dieser Materialfluss der nicht verwertbaren Pflanzenreste wird im Stand der Technik von der Stelleinrichtung der jeweiligen Siebeinrichtung gestört, da die Stelleinrichtung sich an einem rückwärtigen Ende der Siebeinrichtung bezogen auf den Materialstrom der Pflanzenreste gewissermaßen "im Weg" befindet. Ungewollte Verstopfungen des Strömungsquerschnitts der Pflanzenreste können sodann die unerwünschte Folge sein.

Der vorliegenden Erfindung liegt somit die Aufgabe zugrunde, eine Siebeinrichtung bereitzustellen, die im Zuge ihrer Verwendung in einer Erntemaschine den Austrag von nicht verwertbaren Pflanzenresten weniger behindert, als dies im Stand der Technik der Fall ist.

Die zugrunde liegende Aufgabe wird ausgehend von der Siebeinrichtung der eingangs beschriebenen Art erfindungsgemäß dadurch gelöst, dass die Stelleinrichtung ein Linearelement sowie ein Drehelement umfasst. Das Linearelement ist mittels des Motors zumindest mittelbar in eine translatorische Bewegung versetzbar, wobei das Linearelement verdrehsicher gelagert ist. Dies führt dazu, dass das Linearelement eine ausschließlich translatorische Bewegung relativ zu der übrigen Stelleinrichtung ausführt. Mittels komplementär ausgebildeter Gewindeabschnitte des Linearelements sowie des Drehelements ist diese translatorische Bewegung des Linearelements in eine rotatorische Bewegung des Drehelements übersetzbar, vorzugsweise unmittelbar. Hierzu kämmen die Gewindeabschnitte des Linearelements und des Drehelements miteinander, wobei aufgrund der rein translatorischen Bewegung des Linearelements letztlich das Drehelement in eine rotatorische Bewegung gezwungen wird.

Die auf diese Weise erzeugte rotatorische Bewegung des Drehelements erfolgt erfindungsgemäß um eine zu einer Längsachse der Stelleinrichtung parallele Drehachse. Diese Drehachse ist ferner parallel zu einer Bewegungsachse des Linearelements orientiert. Vorteilhafterweise fallen die Drehachse des Drehelements und die Bewegungsachse des Linearelements zusammen. Die Drehbewegung des Drehelements ist letztlich mittels des Übertragungsorgans auf die Lamellen übertragbar, sodass die Siebstellungen der letzteren veränderbar sind. Eine derart ausgebildete Stelleinrichtung kann auch als "Längs-Schwenkantrieb" bezeichnet werden, da die Stelleinrichtung eine kinematische Übertragung einer translatorischen in eine rotatorische Bewegung vornimmt, wodurch in besonders vorteilhafter Weise eine Übersetzung eines Abtriebsmoments des Motors auf ein Stellmoment des Drehelements erfolgt.

Die erfindungsgemäße Siebeinrichtung hat viele Vorteile. Insbesondere ermöglicht sie es, die Stelleinrichtung parallel zu einer die Längsachse der Erntemaschine beinhaltenden Längsebene bzw. parallel zu einer Längsachse der Siebeinrichtung auszurichten. Dies liegt darin begründet, dass mittels der Übersetzung der Linearbewegung in eine Rotationsbewegung die Erzeugung eines 90°-Winkels zwischen einer Ausrichtung der Stelleinrichtung und einer Drehebene eines an dem Drehelement angeordneten Bauteils erzeugt wird. Im Stand der Technik sind demgegenüber die Wirkungsrichtung des Motors und eine Antriebsebene der sich daran anschließenden Bauteile parallel zueinander orientiert, wodurch ein Einbau einer bisherigen Stelleinrichtung in Querrichtung erforderlich war. Mit anderen Worten hat die erfindungsgemäße Ausgestaltung der Stelleinrichtung zur Folge, dass selbige nicht wie bisher im Stand der Technik quer zur Längsachse der Siebeinrichtung an letzterer angeordnet werden muss und demzufolge nicht in der bisher zu beklagenden Weise den Strömungsquerschnitt des von Pflanzenresten gebildeten Materialstroms blockiert.

Ein weiterer besonderer Vorteil besteht darin, dass eine Behinderung von Klopfsensoren durch die Stelleinrichtung aufgrund der vom Stand der Technik abweichenden Ausrichtung minimiert wird. Derartige Klopfsensoren werden zur Analyse des in den Pflanzenresten verbliebenen Kornanteils verwendet, wobei dies im Stand der Technik nicht mit hinreichender Zuverlässigkeit vorgenommen werden kann. Die Klopfsensoren erfassen ein Auftreffen von Körnern auf einer Sensoroberfläche. Auf diese Weise kann unter Einbeziehung des gesamten, von Pflanzenresten gebildeten Materialstroms ein Kornanteil desselben berechnet werden. Die quer verbaute Stelleinrichtung der bekannten Siebeinrichtung behindert dieses Auftreffen der Körner auf den Klopfsensoren und verfälscht mithin die Analyse des Kornanteils am Materialstrom der Pflanzenreste. Bei der erfindungsgemäßen Siebeinrichtung kann die Stelleinrichtung nunmehr längsachsparallel eingebaut werden, sodass im Ergebnis die Klopfsensoren nicht behindert werden und dadurch die Analyse des verbleibenden Kornanteils an den ausgeworfenen Pflanzenresten zuverlässiger vorgenommen werden kann. Insbesondere befinden sich die Klopfsensoren aufgrund der Möglichkeit der längsachsparallelen Anordnung der Stelleinrichtung - bezogen auf den Materialstrom der Pflanzenreste - nicht länger "im Schatten" der Stelleinrichtung.

Darüber hinaus bietet die erfindungsgemäße Siebeinrichtung den besonderen Vorteil, dass die Stelleinrichtung im Vergleich zum Stand der Technik mit weniger Gelenksstellen am Übertragungsorgan auskommt. Im Stand der Technik wird typischerweise eine Linearbewegung, insbesondere eines Kolbens, mittels eines Drehgelenks in eine rotatorische Bewegung um eine vertikale Achse überführt. Diese rotatorische Bewegung wird sodann abermals mittels eines Gelenks in eine lineare Bewegung einer Stellschiene überführt, die wiederum in eine Vielzahl rotatorischer Bewegungen, nämlich die Schwenkbewegungen der einzelnen Lamellen um deren Schwenkachsen, überführt wird. Die erste Übertragung, nämlich von einer linearen Bewegung hin zu einer Drehbewegung, findet mittels der erfindungsgemäßen Siebeinrichtung bzw. der darin verbauten erfindungsgemäßen Stelleinrichtung nunmehr unmittelbar und ohne die Verwendung einer zusätzlichen Gelenkstelle bzw. eines zusätzlichen Gelenks statt. Dies bringt den Vorteil eines geringeren Spiels zwischen den einzelnen Elementen der Stelleinrichtung, wodurch eine Hysterese beim Übergang von der einen hin zu der anderen Stellrichtung der Stelleinrichtung minimiert wird. Im Ergebnis können die Lamellen unter Verwendung der erfindungsgemäßen Stelleinrichtung präziser eingestellt werden, sodass der Nutzer der Erntemaschine die gewünschten Durchgangsquerschnitte der Siebeinrichtung zuverlässig einstellen kann.

Die Erfindung bietet den weiteren Vorteil einer einfacheren Wartbarkeit im Hinblick auf ein Wechseln eines Siebfeldes der Siebeinrichtung. Die einzelnen Siebfelder werden in aller Regel rückwärtig aus der Erntemaschine entnommen, wobei aufgrund der bisherigen Anordnung der Stelleinrichtung letztere schlechterdings den hierfür notwendigen Raum blockierte. Infolgedessen musste die Stelleinrichtung in jedem Fall mit ausgebaut werden. Die nunmehr mögliche längsachsparallele Anordnung der Stelleinrichtung bei der erfindungsgemäßen Siebeinrichtung blockiert den rückwärtigen Raum der Siebeinrichtung hingegen nicht und kann demzufolge ohne Weiteres auch im Zuge eines Wechsels eines Siebfeldes in bzw. an der Siebeinrichtung verbleiben.

In einer besonders vorteilhaften Ausgestaltung der erfindungsgemäßen Siebeinrichtung ist das Linearelement von einem Hohlstab gebildet, der eine sich zumindest über einen Teil seiner Länge erstreckende Ausnehmung aufweist. Vorzugsweise verfügt dieser Hohlstab an seiner inneren Mantelfläche der Ausnehmung über den Gewindeabschnitt, der in Form eines Innengewindes ausgebildet ist. Ein derartig als Hohlstab ausgebildetes Linearelement kann besonders einfach mit einem komplementär ausgebildeten Drehelement zusammenwirken, das in den Hohlraum bzw. die Ausnehmung des Linearelements einfährt.

Entsprechend kann es besonders von Vorteil sein, wenn das Drehelement von einem langgestreckten Gewindestab gebildet ist, der an seiner äußeren Mantelfläche einen Gewindeabschnitt aufweist. Letzterer ist als Außengewinde ausgebildet und dazu geeignet, mit dem als Innengewinde ausgebildeten Gewindeabschnitt des Linearelements zu kämmen. Die Kombination eines als Hohlstab ausgebildeten Linearelements mit einem als Gewindestab ausgebildeten Drehelement ermöglicht die unmittelbare Übertragung der translatorischen Bewegung des Linearelements auf eine rotatorische Bewegung des Drehelements.

Für die Verwendbarkeit der erfindungsgemäßen Siebeinrichtung, insbesondere der darin verbauten erfindungsgemäßen Stelleinrichtung, ist es von besonderer Bedeutung, dass die Stelleinrichtung zur Erzeugung eines bestimmten Drehmoments bzw. Stellmoments geeignet ist. Dies ist darauf zurückzuführen, dass die Verstellung der Lamellen durchaus eines nicht vernachlässigbaren Stellmoments bedarf, was insbesondere auf die Vielzahl der typischerweise verwendeten Lamellen zurückzuführen ist.

Es versteht sich, dass im Zuge des Zusammenwirkens von Linearelement und Drehelement an Gewindeflanken der miteinander eingreifenden Gewinde durchaus erhebliche Flächenpressungen auftreten können. Dies ist darauf zurückzuführen, dass die Verstellung der Lamellen durchaus eines nicht vernachlässigbaren Stellmoments bedarf, was insbesondere auf die Vielzahl der typischerweise verwendeten Lamellen zurückzuführen ist. Entsprechend muss das Linearelement im Zuge seiner translatorischen Bewegung ein entsprechendes Stellmoment auf das Drehelement erzeugen, was mittels Pressung der Gewindeflanken beider Bauteile gegeneinander erfolgt. Zur Begrenzung der Flächenpressung ist es daher von besonderem Vorteil, wenn der an dem Drehelement ausgebildete Gewindeabschnitt ein Gewinde mit einer Steigung von mindestens 50 mm, vorzugsweise mindestens 60 mm, weiter vorzugsweise mindestens 70 mm, aufweist. Auf diese Weise ist es möglich, mit einer bestimmten, von dem Linearelement ausgeübten Antriebskraft ein erhebliches Drehmoment auf das Drehelement auszuüben, ohne die an den Gewindeflanken auftretenden Flächenpressungen übermäßig ansteigen zu lassen. Ferner beträgt ein Durchmesser des Gewindestabes vorteilhafterweise mindestens 15 mm, vorzugsweise mindestens 20 mm, weiter vorzugsweise mindestens 25 mm.

Bei Verwendung einer solchen Siebeinrichtung, deren Siebrahmen eine rechteckige Form aufweist und deren Länge vorzugsweise deren Breite übersteigt, ist eine solche Ausgestaltung von besonderem Vorteil, bei der die Längsachse der Stelleinrichtung parallel zu einer Längsseite des Siebrahmens orientiert ist. Die sich aus einer solchen Ausgestaltung ergebenden Vorteile sind vorstehend bereits dargelegt.

Bezüglich der Anordnung der Stelleinrichtung an der Siebeinrichtung ist es besonders zu bevorzugen, diese in einem Mittelbereich der Siebeinrichtung vorzunehmen. Dies ist insbesondere dann von Vorteil, wenn die Siebeinrichtung über mindestens zwei nebeneinander angeordnete Siebfelder verfügt, die jeweils mit einer Mehrzahl von Lamellen ausgestattet sind. Zur Verstellung der Lamellen und einer dadurch bedingten Veränderung der Durchgangsquerschnitte ist es sodann besonders vorteilhaft, eine Kraftübertragung ausgehend von der Stelleinrichtung symmetrisch bzw. gleichartig auf beide Siebfelder ausüben zu können. Die mittige Anordnung der Stelleinrichtung bezogen auf den gesamten Siebrahmen ermöglicht eine ebensolche symmetrische Krafteinleitung. Grundsätzlich erfolgt die Verstellung von Lamellen mehrerer Siebfelder vorzugsweise mittels einer einzigen Stelleinrichtung.

Bei Verwendung einer Anordnung der Stelleinrichtung im Mittelbereich der Siebeinrichtung ist es besonders vorteilhaft, diese zumindest an, vorzugsweise in, einem Mittelprofil des Siebrahmens anzuordnen. Bei dieser Anordnung verschwindet die Stelleinrichtung gewissermaßen vollständig in dem Siebrahmen und übt demzufolge keine negativen Einflüsse weder auf die Strömung von Pflanzenresten noch von losen Früchten aus.

Die Unterbringung der Stelleinrichtung innerhalb des Mittelprofils ist hier aufgrund der besonders kompakten Bauweise der erfindungsgemäßen Stelleinrichtung, insbesondere deren geringer Breite, überhaupt erst möglich, wobei die kompakte Bauweise wiederum durch die erfindungsgemäße Ausgestaltung der Stelleinrichtung als Längs-Schwenkantrieb ermöglicht wird.

Vorteilhafterweise beträgt insbesondere eine Breite der Stelleinrichtung insgesamt maximal 60 mm, vorzugsweise maximal 50 mm, weiter vorzugsweise maximal 40 mm, während die Höhe der Stelleinrichtung deren Breite typischerweise übersteigt. Eine derart ausgebildete Stelleinrichtung kann insbesondere besonders einfach in einem Mittelbereich der Siebeinrichtung, insbesondere innerhalb des Mittelprofils des Siebrahmens, angeordnet werden, ohne störend in einen Siebbereich einzugreifen und dadurch einen Durchgang von Früchten von der Oberseite hin zur Unterseite der Siebeinrichtung zu stören.

Die zugrunde liegende Aufgabe wird ausgehend von der Erntemaschine der eingangs beschriebenen Art ferner erfindungsgemäß dadurch gelöst, dass die Erntemaschine mit einer erfindungsgemäßen Siebeinrichtung gemäß vorstehender Beschreibung ausgestattet ist. Bei einer solchen Erntemaschine ist der rückwärtige Auswurf von Pflanzenresten nicht in der im Stand der Technik zu beklagenden Weise negativ von der Stelleinrichtung der Siebeinrichtung beeinflusst. Ferner wirkt sich die Stelleinrichtung nicht hinderlich auf die Analyse des Kornanteils an den Pflanzenresten aus. Außerdem ist der Austausch der Siebfelder und mithin die Wartung der Erntemaschine vereinfacht.

Vorteilhafterweise ist die Siebeinrichtung derart in der Erntemaschine angeordnet, dass eine Längsachse der Stelleinrichtung parallel zu einer eine Längsachse der Erntemaschine beinhaltenden Längsebene orientiert ist. Entsprechend ist es weiterhin von besonderem Vorteil, wenn eine Längsachse der Stelleinrichtung parallel zu der Längsachse der Siebeinrichtung und mithin parallel zu der Längsebene der Erntemaschine orientiert ist. Eine derartige Ausrichtung der Stelleinrichtung ist erfindungsgemäß besonders einfach möglich.

Weiterhin ist eine solche Erntemaschine von besonderem Vorteil, die über mindestens zwei übereinander angeordnete Siebeinrichtungen verfügt, die jeweils in der vorstehend beschriebenen, erfindungsgemäßen Weise ausgebildet sind. Die obere Siebeinrichtung wird typischerweise als "Obersieb" und die untere Siebeinrichtung als "Untersieb" bezeichnet. Beide Siebeinrichtungen können jeweils über mehrere, insbesondere zwei, Siebfelder verfügen.

Die erfindungsgemäße Siebeinrichtung sowie die erfindungsgemäße Erntemaschine werden nachstehend anhand eines Ausführungsbeispiels, das in den Figuren dargestellt ist, näher erläutert. Es zeigt:
- Fig. 1:: Einen Querschnitt durch eine erfindungsgemäße Erntemaschine,
- Fig. 2:: Einen Ausschnitt eines hinteren Bereich der Erntemaschine gemäß Figur 1,
- Fig. 3:: Zwei erfindungsgemäße, übereinander angeordnete Siebeinrichtungen,
- Fig. 4:: Ein Detail eines Übertragungsorgans für eine erfindungsgemäße Siebeinrichtung gemäß Figur 3,
- Fig. 5:: Eine Stelleinrichtung für eine erfindungsgemäße Siebeinrichtung gemäß Figur 3 und
- Fig. 6:: Einen Querschnitt durch die Stelleinrichtung gemäß Figur 5.

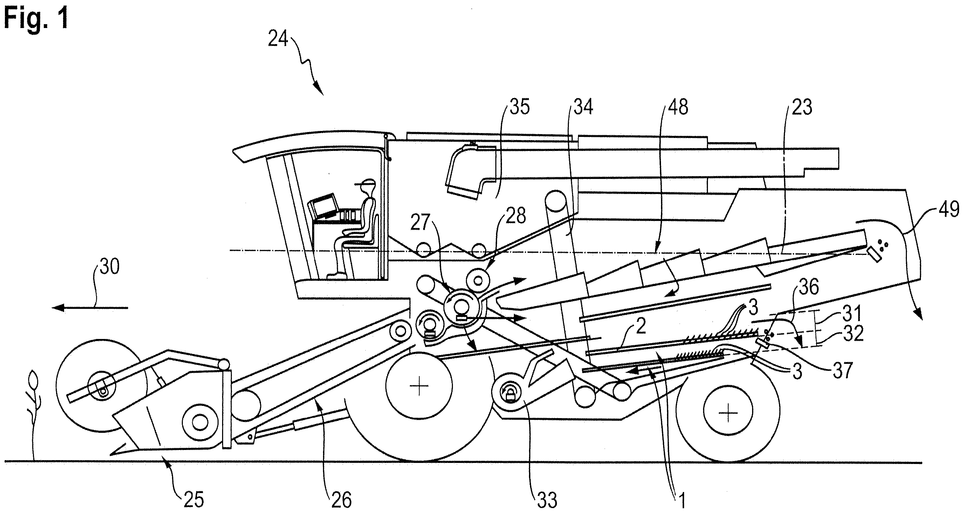

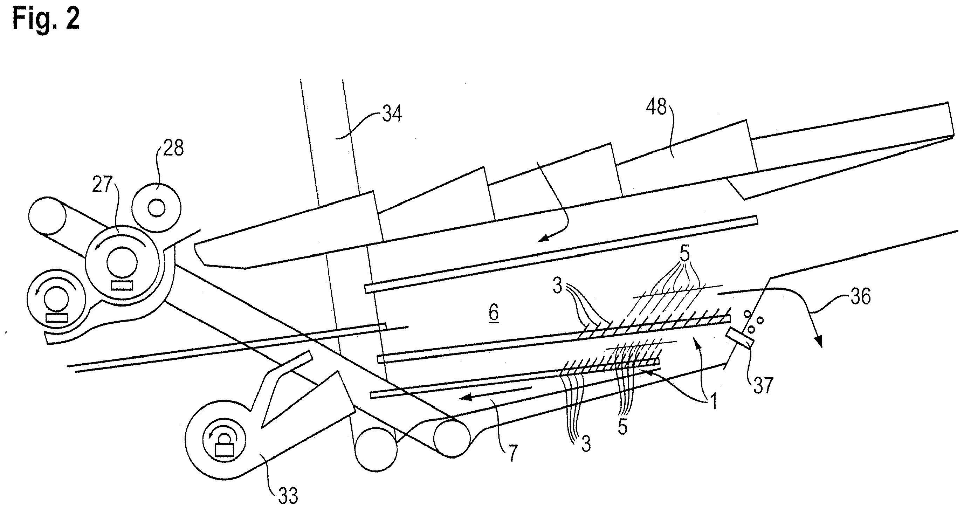

Ein Ausführungsbeispiel, das in den **Figuren 1 bis 6** gezeigt ist, umfasst eine erfindungsgemäße Erntemaschine **24,** die mit zwei übereinander angeordneten, erfindungsgemäßen Siebeinrichtungen **1** ausgestattet ist. Die Erntemaschine **24,** die sich in einem Normalbetrieb in Richtung des in **Figur 1** gezeigten Pfeils **30** fortbewegt, verfügt über ein Schneidwerk **25,** ein Förderorgan **26,** eine Dreschtrommel **27** sowie eine Wendetrommel **28.** Mittels des Schneidwerks **25** werden zu erntende Pflanzen geschnitten, sodann mittels des Förderorgans **26** in Richtung der Dreschtrommel **27** geführt und mittels selbiger gedroschen. Ein Pflanzenreste sowie Früchte enthaltender Gutstrom wird sodann ausgehend von der Dreschtrommel **27** in Richtung eines Schüttlers **48** weitergeleitet, wobei der Gutstrom mittels der Wendetrommel **28** umgelenkt und verteilt wird. Der Schüttler **48,** der hier als Hordenschüttler ausgebildet ist, nimmt bereits eine erste Trennung des gesamten Gutstroms vor, wobei besonders grobe Pflanzenreste, insbesondere Stroh, unmittelbar rückwärtig aus der Erntemaschine **24** ausgeworfen werden. Dies ist in **Figur 1** mittels des Pfeils **49** veranschaulicht. Übrige, durch den Schüttler hindurchtretende Teile des Gutstroms werden schließlich den Siebeinrichtungen **1** zugeleitet, wobei die obere Siebeinrichtung **1** das sogenannte Obersieb und die untere Siebeinrichtung 1 das sogenannte Untersieb bilden.

Die Siebeinrichtungen **1** dienen dazu, den ihnen zugeleiteten Gutstrom zu trennen bzw. zu sieben, sodass sämtliche Pflanzenreste von den letztlich gewünschten Früchten getrennt werden. Die nicht verwertbaren Pflanzenreste werden an der Rückseite der Erntemaschine **24** ausgeworfen; dies ist in **Figur 1** mittels des Pfeils **36** veranschaulicht. Zur Durchleitung des von den Pflanzenresten gebildeten Materialstroms steht oberhalb der oberen Siebeinrichtung **1** lediglich ein Querschnitt mit einer Höhe **31** zur Verfügung, oberhalb der unteren Siebeinrichtung **1** analog ein Querschnitt mit einer Höhe **32.** Zur Trennung der Pflanzenreste von den gewünschten Früchten verfügt die Erntemaschine **24** unterstützend über ein Gebläse **33,** dass die Siebeinrichtungen **1** in eine Richtung von unten nach oben durchströmt. Hierdurch erfüllt das Gebläse **33** gewissermaßen die Aufgabe eines Luftsichters, der einen Durchtritt von besonders leichten Bestandteilen des zu siebenden Gutstroms durch die jeweilige Siebeinrichtung **1** hindurch unterbindet.

Prinzipbedingt enthalten die rückwärtig aus der Erntemaschine **24** ausgetragenen Pflanzenreste einen gewissen Anteil an Früchten, den sogenannten Kornanteil. Um diesen Kornanteil zu ermitteln, verfügt die Erntemaschine **24** an einem hinteren Ende der oberen Siebeinrichtung **1** über einen Klopfsensor **37.** Dieser ist dazu geeignet, die Anzahl auf ihn treffender Körner zu erfassen und auf diese Weise in Kenntnis des gesamten ausgetragenen Materialstroms den Kornanteil zu ermitteln. Ausgesiebte Früchte, die erfolgreich mittels der Siebeinrichtungen **1** aus dem Gutstrom herausgesiebt wurden, werden schließlich mittels eines Elevators **34** in einen Korntank **35** befördert.

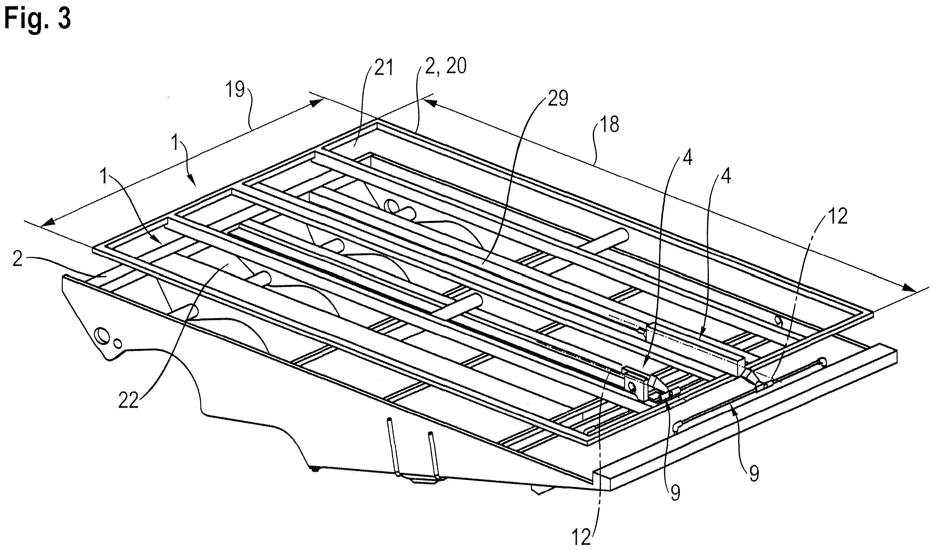

Die Siebeinrichtungen **1,** die insbesondere in **Figur 3** dargestellt sind, verfügen jeweils über einen Siebrahmen **2** sowie eine Mehrzahl von Lamellen **3.** Jeweils benachbarte Lamellen **3** begrenzen gemeinsam einen Durchgangsquerschnitt **5,** der zum Durchtritt von Material ausgehend von einer Oberseite **6** hin zu einer Unterseite **7** der jeweiligen Siebeinrichtung 1 zur Verfügung steht. Dabei versteht es sich, dass ein umso größerer Durchgangsquerschnitt **5** zwischen zwei Lamellen **3** einen Durchgang von umso größeren einzelnen Elementen des mittels der Siebeinrichtung **1** zu siebenden Gutstroms ermöglicht. Die Siebrahmen **2** sind jeweils von einer Mehrzahl von Längsstreben sowie Querstreben gebildet und weisen jeweils eine Länge **18** sowie eine Breite **19** auf. Insbesondere sind die Siebrahmen **2** der hier gezeigten Siebeinrichtungen **1** rechteckig ausgeführt, wobei Längsseiten **20** der Siebeinrichtungen **1** parallel zu einer Längsebene verlaufen, die eine Längsachse **23** der Erntemaschine **24** beinhaltet. Mit anderen Worten sind die Siebeinrichtungen **1** insgesamt in Längsrichtung der Erntemaschine **24** ausgerichtet.

Zur Erzielung der gewünschten Siebleistung werden die Siebrahmen **2** mitsamt der darin gelagerten Lamellen **3** mittels einer in den Figuren nicht dargestellten Antriebseinrichtung zyklisch in bekannter Weise hin und her bewegt. Es ergibt sich unmittelbar, dass in Abhängigkeit einer jeweils geernteten Pflanze die Einstellung unterschiedlicher Durchgangsquerschnitte **5** zwischen jeweils benachbarten Lamellen **3** wünschenswert ist, um die Siebeinrichtungen **1** für verschiedene Korngrößen der jeweils geernteten Früchte einzustellen.

Zur Einstellung der Lamellen **3** bzw. letztlich im Ergebnis der Durchgangsquerschnitte **5** verfügt jede der hier gezeigten Siebeinrichtungen **1** jeweils über eine Stelleinrichtung **4.** Bezugnehmend auf die obere Siebeinrichtung **1,** die in ihrer konstruktiven Ausgestaltung gleichartig zu der unteren Siebeinrichtung **1** ausgebildet ist, ist die Stelleinrichtung **4** in einem Mittelprofil **29** des Siebrahmens **2** angeordnet. Das Mittelprofil **29** unterteilt die Siebeinrichtung **1** in insgesamt zwei Siebfelder **21, 22,** die sich jeweils an einer Seite des Mittelprofils **29** befinden. Die Stelleinrichtung **4** ist derart relativ zu der Siebeinrichtung 1 orientiert, dass eine Längsachse **12** der Stelleinrichtung **4** parallel zu der Längsseite **20** der Siebeinrichtung **1** verläuft. Dies ist im Vergleich zum Stand der Technik besonders vorteilhaft, da die Stelleinrichtung **4** als solche nicht quer in einen Strömungsquerschnitt des rückwärtig an der Erntemaschine **24** auszuwerfen den Materialstroms von Pflanzenresten hineinragt. Ferner ist es in dem gezeigten Beispiel von besonderem Vorteil, dass die Stelleinrichtung **4** in dem Mittelprofil **29** der zugehörigen Siebeinrichtung 1 angeordnet ist und somit insgesamt keine störenden Einfluss weder auf den Materialstrom der Pflanzenreste noch auf die durch die Siebeinrichtung **1** hindurchtretenden Früchte ausübt.

Die Stelleinrichtung **4,** die nachstehend detailliert beschrieben ist, ist dazu geeignet, ein Stellmoment zur Verstellung der Lamellen **3** zu erzeugen. Durch Wirkung des Stellmoments können Siebstellungen der Lamellen **3** verändert werden, wodurch letztlich die Durchgangsquerschnitte **5** zwischen benachbarten Lamellen **3** eingestellt werden. Hierzu sind die Lamellen **3** und die Stelleinrichtung **4** mittels eines Übertragungsorgans **9** in Kraft übertragender Weise miteinander gekoppelt. Das Übertragungsorgan **9** besteht typischerweise - und so auch hier - aus einer Mehrzahl von kraftübertragenden Elementen, die dazu geeignet sind, das mittels der Stelleinrichtung erzeugte Stellmoment zu den Lamellen **3** zu leiten bzw. auf diese zu übertragen.

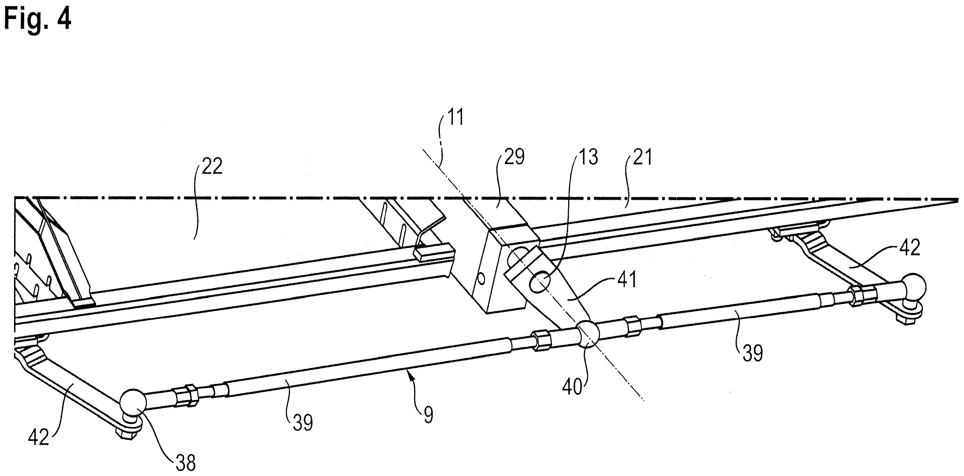

In dem gezeigten Beispiel umfasst das Übertragungsorgan **9,** das sich besonders gut anhand von **Figur 4** ergibt, über ein Schwenkelement **41,** das drehantreibbar um eine Drehachse **11** der Stelleinrichtung **4** angeordnet ist. Das Schwenkelement **41,** das in Drehmoment übertragender Weise mit dem Drehelement **13** zusammenwirkt, erstreckt sich radial zu der Drehachse **11.** Dabei ist es innerhalb eines begrenzten Winkelbereichs, der hier ca. 90° beträgt, schwenkbar, wobei im Zuge der Schwenkbewegung des Schwenkelements **41** Übertragungsstäbe **39, die** an dieses angeschlossen sind, bewegt werden. Die Übertragungsstäbe **39** sind mittels eines Gelenks **40** an das Schwenkelement **41** angeschlossen. An dem Gelenk **40** gegenüberliegenden Enden der Übertragungsstäbe **39** wirken diese jeweils mittels Kugelgelenken **38** mit Schwenkhebel **42** zusammen. Letztere sind schließlich mittels einer in den Figuren nicht dargestellten Stellschiene gekoppelt, sodass eine Verschwenkung der Schwenkhebel **42** um eine zugehörige Schwenkachse eine translatorische Bewegung der Stellschiene zur Folge hat. Entsprechende Ausgestaltungen sind dem Stand der Technik entnehmbar. Die Stellschiene wirkt wiederum mit den Lamellen **3** zusammen, die jeweils um eine zugehörige Drehachse drehbar gelagert sind. Dies hat zur Folge, dass die translatorische Bewegung der jeweiligen Stellschiene einer rotatorische Bewegung der Lamellen **3** zur Folge hat, die schließlich in einer Änderung der Durchgangsquerschnitte **5** zwischen benachbarten Lamellen **3** bewirkt.

Die mittige Anordnung der Stelleinrichtung **4** relativ zu dem zugehörigen Siebrahmen **2,** wie sie in dem gezeigten Beispiel ausgeführt ist, bietet ferner den besonderen Vorteil einer symmetrischen Kraftaufteilung der Stelleinrichtung **4** auf die beiden Siebfelder **20, 21** bzw. zugehörigen Lamellen **3.**

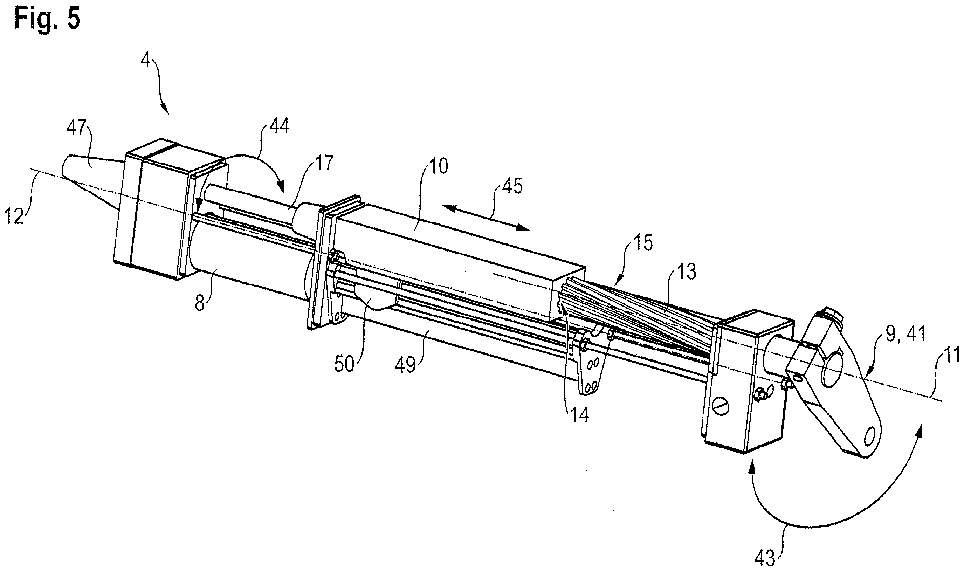

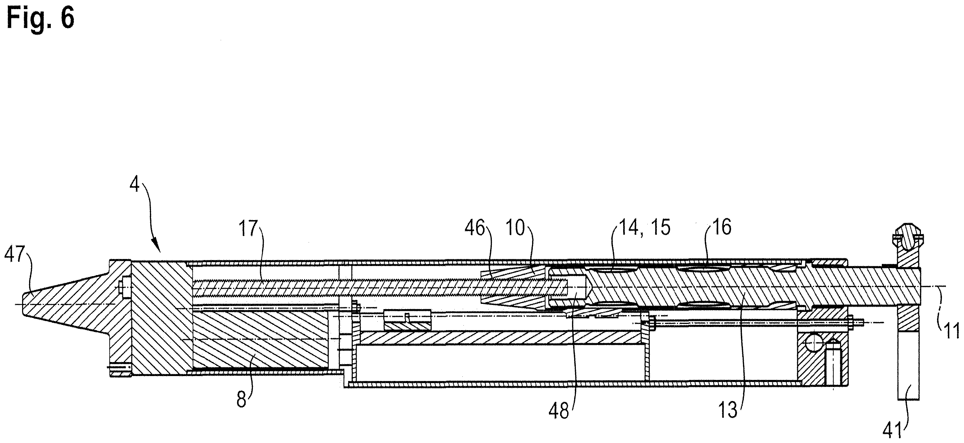

Die Stelleinrichtung **4,** die sich besonders gut anhand der **Figuren 5** **und** **6** ergibt, ist für den Erfolg der erfindungsgemäßen Siebeinrichtung von erheblicher Bedeutung. Insbesondere ist die Stelleinrichtung **4** sehr kompakt konstruiert, wobei deren Breite hier lediglich 34 mm beträgt. Auf diese Weise ist die Stelleinrichtung **4** besonders gut dazu geeignet, innerhalb des Siebrahmens **2,** und insbesondere (wie hier ausgeführt) innerhalb des Mittelprofils **29,** untergebracht zu werden.

Die Stelleinrichtung **4** verfügt über einen Motor **8,** der hier als Elektromotor ausgebildet ist. Zur Versorgung des Motors **8** mit elektrischem Strom ist die Stelleinrichtung **4** mittels eines nicht dargestellten Kabels mit einer Stromquelle verbunden, wobei das Kabel mittels eines Kabelauslasses **47** in die Stelleinrichtung **4** geführt ist. Der Motor **8** ist dazu geeignet, eine Antriebsspindel **17** rotatorisch anzutreiben, wobei die Antriebsspindel **17** und eine in den Figuren nicht dargestellte Abtriebswelle des Motors **8** in Drehmoment übertragender Weise miteinander gekoppelt sind. Der Antrieb der Antriebsspindel **17** mittels des Motors 8 hat zur Folge, dass erstere sich im Sinne des in **Figur 5** dargestellten Doppelpfeils **44** dreht.

Ferner verfügt die Stelleinrichtung über ein Linearelement **10,** das derart mit der Antriebsspindel **17** eingreift, dass die Drehung der Antriebsspindel **17** eine translatorische Bewegung des Linearelements **10** in eine zu der Längsachse **12** der Stelleinrichtung **4** parallele Richtung zur Folge hat. Die Bewegung des Linearelements ist in **Figur 5** mittels eines Doppelpfeils **45** veranschaulicht. Die Übertragung der Drehbewegung der Antriebsspindel **17** auf das Linearelement **10** wird in dem gezeigten Beispiel in einem gemeinsamen Eingriffbereich **46** der beiden Bauteile mittels korrespondierender Gewinde erzielt, wobei ein an der Antriebsspindel **17** angeordnetes Außengewinde mit einem komplementären Innengewinde des Linearelements **10** zusammenwirkt.

Das Linearelement **10** verfügt seinerseits über eine zentrale Ausnehmung **16,** die sich insbesondere aus **Figur 6** ergibt. Mithin ist das Linearelement **10** von einem Hohlstab gebildet. An einer inneren Mantelfläche dieser Ausnehmungen **16** verfügt das Linearelement **10** über einen Gewindeabschnitt **14,** der hier in Form eines vergleichsweise flachen Gewindes ausgeführt ist. Die Steigung des Gewindes beträgt hier ca. 80 mm.

Das Linearelement **10** wirkt formschlüssig mit einem Drehelement **13** zusammen, das hier in Form eines Gewindestabes ausgebildet ist. Besagtes Drehelement **13** verfügt an seiner äußeren Mantelfläche über einen Gewindeabschnitt **15,** der seinerseits ebenfalls ein Gewinde beinhaltet. Letzteres ist komplementär dem Gewinde des Linearelements **10** ausgebildet, sodass die Gewindeabschnitte **14, 15** des Linearelements **10** sowie des Drehelements **13** miteinander kämmen. Da das Drehelement **13** passgenau auf die Ausnehmungen **16** des Linearelements **10** ausgebildet ist, bewirkt die rein translatorische Bewegung des Linearelements **10** zwangsweise eine rotatorische Bewegung des Drehelements **13.** Letzteres findet um eine Drehachse **11** statt, die parallel zu der Längsachse **12** der Stelleinrichtung **4** orientiert ist. Dabei versteht es sich, dass die zwangsweise Übersetzung der translatorischen Bewegung des Linearelements **10** hin zu der rotatorischen Bewegung des Drehelements **13** dadurch sichergestellt ist, dass das Linearelement **10** als solches verdrehsicher relativ zu der Drehachse **11** ausgebildet ist.

Die rotatorische Bewegung des Drehelements **13** wird sodann unmittelbar auf das vorstehend beschriebene Schwenkelement **41** übertragen, das in Drehmoment übertragender Weise mit dem Drehelement **13** gekoppelt ist. Im Ergebnis ist die Stelleinrichtung **4** folglich dazu geeignet, das Schwenkelement **41** um die Drehachse **11** des Drehelements **13** zu verschwenken, wobei die mögliche Schwenkbewegung des Schwenkelements **41** in **Figur 5** mittels des dortigen Doppelpfeils **43** veranschaulicht ist.

Die erfindungsgemäße Ausgestaltung der Stelleinrichtung **4** unter Verwendung eines translatorisch bewegbaren Linearelements **10** sowie eines damit gekoppelten Drehelements **13** ermöglicht die Übersetzung des Abtriebsmoments des Motors **8** in ein ungleich größeres Stellmoment, mittels dessen sodann die Lamellen 3 verstellt werden können. Diese hohe Übersetzung wird durch das erfindungsgemäße Zusammenwirken der translatorischen Bewegung des Linearelements **10** mit der rotatorischen Bewegung des Drehelements **13** erzielt, wobei insbesondere eine besonders kompakte Bauweise der Stelleinrichtung **4** realisiert werden kann.

Die vorstehend im Zusammenhang mit dem Ausführungsbeispiel beschriebenen Merkmale sind nicht zwingend auf die hier dargelegte Merkmalskombination angewiesen, sondern können grundsätzlich auch unabhängig voneinander vorteilhaft wirken und verwirklicht werden.
- 1: Siebeinrichtung
- 2: Siebrahmen
- 3: Lamelle
- 4: Stelleinrichtung
- 5: Durchgangsquerschnitt
- 6: Oberseite
- 7: Unterseite
- 8: Motor
- 9: Übertragungsorgan
- 10: Linearelement
- 11: Drehachse
- 12: Längsachse
- 13: Drehelement
- 14: Gewindeabschnitt
- 15: Gewindeabschnitt
- 16: Ausnehmung
- 17: Antriebsspindel
- 18: Länge
- 19: Breite
- 20: Längsseite
- 21: Siebfeld
- 22: Siebfeld
- 23: Längsachse
- 24: Erntemaschine
- 25: Schneidwerk
- 26: Förderorgan
- 27: Dreschtrommel
- 28: Wendetrommel
- 29: Mittelprofil
- 30: Pfeil
- 31: Höhe
- 32: Höhe
- 33: Gebläse
- 34: Elevator
- 35: Korntank
- 36: Pfeil
- 37: Klopfsensor
- 38: Kugelgelenk
- 39: Übertragungsstab
- 40: Gelenk
- 41: Schwenkelement
- 42: Schwenkhebel
- 43: Doppelpfeil
- 44: Doppelpfeil
- 45: Doppelpfeil
- 46: Eingriffbereich
- 47: Kabelauslass
- 48: Schüttler
- 49: Pfeil

## Patentansprüche

1. Siebeinrichtung (1) für eine Erntemaschine (24), insbesondere für einen Mähdrescher, insbesondere zur Trennung von losen Früchten von Pflanzenresten, die Siebeinrichtung (1) umfassend
- mindestens einen Siebrahmen (2),
- eine Vielzahl von Lamellen (3), die an dem Siebrahmen (2) angeordnet sind, sowie
- mindestens eine Stelleinrichtung (4) zur Verstellung von Lamellen (3),
wobei die Lamellen (3) derart an dem Siebrahmen (2) angeordnet sind, dass sie Durchgangsquerschnitte (5) zum Durchtritt von Material ausgehend von einer Oberseite (6) der Siebeinrichtung (1) hin zu deren Unterseite (7) begrenzen,
wobei zumindest eine Mehrzahl der Lamellen (3) derart mit der Stelleinrichtung (4) zusammenwirkt, dass Siebstellungen der Lamellen (3) veränderbar sind, wobei die Durchgangsquerschnitte (5) bei Vorliegen der Lamellen (3) in verschiedenen Siebstellungen unterschiedlich sind,
wobei die Stelleinrichtung (4) mindestens einen Motor (8) sowie mindestens ein Übertragungsorgan (9) umfasst, mittels dessen eine Antriebsleistung des Motors (8) auf die mit der Stelleinrichtung (4) zusammenwirkenden Lamellen (3) übertragbar ist, sodass die Siebstellungen der Lamellen (3) veränderbar sind,
**dadurch gekennzeichnet, dass**
die Stelleinrichtung (4) ein Linearelement (10) sowie ein Drehelement (13) umfasst,
wobei das Linearelement (10) mittels des Motors (8) in eine translatorische Bewegung versetzbar ist und die translatorische Bewegung mittels Wirkung komplementär ausgebildeter Gewindeabschnitte (14, 15) des Linearelements (10) sowie des Drehelements (13) in eine rotatorische Bewegung des Drehelements (13) übersetzbar ist, sodass das Drehelement (13) um eine zu einer Längsachse (12) der Stelleinrichtung (4) parallele Drehachse (11) dreht.

2. Siebeinrichtung (1) nach Anspruch 1, **dadurch gekennzeichnet, dass** das Übertragungsorgan (9)
- mindestens ein sich radial über die Drehachse (11) des Drehelements (13) hinaus erstreckendes Schwenkelement (41),
- mindestens einen an das Schwenkelement (41) angeschlossenen Übertragungsstab (39),
- mindestens einen schwenkbeweglich mit dem Übertragungsstab (39) zusammenwirkenden Schwenkhebel (42) sowie
- mindestens eine mit dem Schwenkhebel (42) zusammenwirkende, linear verschieblich gelagerte Stellschiene
umfasst, wobei das Schwenkelement (41) drehfest mit dem Drehelement (13) zusammenwirkt und der Übertragungsstab (39) derart an das Schwenkelement (41) angeschlossen ist, dass eine Drehung des Schwenkelements (41) eine zumindest anteilig translatorische Bewegung des Übertragungsstabs (39) bewirkt, wobei die Bewegung des Übertragungsstabs (39) dazu geeignet ist, eine Schwenkbewegung des Schwenkhebels (42) um dessen Schwenkachse zu bewirken, die wiederum mittels Übertragung auf die Stellschiene eine lineare Bewegung der Stellschiene bewirkt, die dazu geeignet ist, mittels Kopplung mit zumindest einer Mehrzahl der Lamellen (3), vorzugsweise mit sämtlichen Lamellen (3), deren Siebstellungen zu verändern.

3. Siebeinrichtung (1) nach Anspruch 1 oder 2, **dadurch gekennzeichnet, dass** das Linearelement (10) von einem Hohlstab gebildet ist, der eine sich zumindest über einen Teil seiner Länge erstreckende Ausnehmung (16) aufweist, wobei vorzugsweise der Gewindeabschnitt (14) des Linearelements (10) in Form eines Innengewindes an einer inneren Mantelfläche der Ausnehmung (16) ausgebildet ist.

4. Siebeinrichtung (1) nach Anspruch 3, **dadurch gekennzeichnet, dass** das Drehelement (13) von einem langgestreckten Gewindestab gebildet ist, der an seiner äußeren Mantelfläche ein seinen Gewindeabschnitt (15) ausbildendes Außengewinde aufweist, das dazu geeignet ist, mit dem als Innengewinde ausgebildeten Gewindeabschnitt (14) des Linearelements (10) zu kämmen.

5. Siebeinrichtung (1) nach Anspruch 4, **dadurch gekennzeichnet, dass** ein Durchmesser des als Gewindestab ausgebildeten Drehelements (13) mindestens 15 mm, vorzugsweise mindestens 20 mm, weiter vorzugsweise mindestens 25 mm, beträgt.

6. Siebeinrichtung (1) nach einem der Ansprüche 1 bis 5, **dadurch gekennzeichnet, dass** der Gewindeabschnitt (15) des Drehelements (13) ein Gewinde mit einer Steigung von mindestens 50 mm, vorzugsweise mindestens 60 mm, weiter vorzugsweise mindestens 70 mm, aufweist.

7. Siebeinrichtung (1) nach einem der Ansprüche 1 bis 6, wobei der Siebrahmen (2) eine rechteckige Form aufweist, wobei vorzugsweise eine Länge (18) des Siebrahmens (2) dessen Breite (19) übersteigt, **dadurch gekennzeichnet, dass** die Längsachse (12) der Stelleinrichtung (4) parallel zu einer Längsseite (20) des Siebrahmens (2) orientiert ist.

8. Siebeinrichtung (1) nach einem der Ansprüche 1 bis 7, **dadurch gekennzeichnet, dass** die Stelleinrichtung (4) in einem Mittelbereich der Siebeinrichtung (1) angeordnet ist, wobei vorzugsweise die Stelleinrichtung (4) mit Lamellen (3) von zwei Siebfeldern (21, 22) der Siebeinrichtung (1) zusammenwirkt, wobei die Siebfelder (21, 22) jeweils auf einer Seite der Stelleinrichtung (4) angeordnet sind.

9. Siebeinrichtung (1) nach Anspruch 8, wobei der Siebrahmen (2) ein Mittelprofil (29) aufweist, der den Siebrahmen (2) in die beiden Siebfelder (21, 22) unterteilt, **dadurch gekennzeichnet, dass** die Stelleinrichtung (4) mit dem Mittelprofil (29) zusammenwirkt, insbesondere innerhalb dem Mittelprofil (29) angeordnet ist.

10. Siebeinrichtung (1) nach einem der Ansprüche 1 bis 9, **dadurch gekennzeichnet, dass** eine senkrecht zu einer Längsachse (12) der Stelleinrichtung (4) gemessene Breite der Stelleinrichtung (4) maximal 60 mm, vorzugsweise maximal 50 mm, weiter vorzugsweise maximal 40 mm, beträgt.

11. Erntemaschine (24), insbesondere ein selbstfahrender Mähdrescher zum Ernten von Getreide, umfassend:
- mindestens ein Schneidwerk (25) zum Schneiden mittels der Erntemaschine (24) zu erntender Pflanzen,
- mindestens ein Förderorgan (26) zur Förderung der geschnittenen Pflanzen,
- mindestens ein langgestrecktes, um eine Rotationsachse drehantreibbares Dreschorgan (27), sowie
- mindestens eine um eine Rotationsachse drehantreibbare Wendetrommel (28),
wobei mittels des Förderorgans (26) die geschnittenen Pflanzen zu dem Dreschorgan (27) förderbar sind,
wobei mittels des Dreschorgans (27) derart Früchte von den geschnittenen Pflanzen ablösbar sind, dass die Früchte sodann losgelöst von Pflanzenresten der geschnittenen Pflanzen vorliegen,
wobei mittels der Wendetrommel (28) ein von dem Dreschorgan (27) ausgehender, sowohl lose Früchte als auch Pflanzenreste enthaltender Materialstrom an mindestens eine nachgeschaltete Siebeinrichtung (1) übergebbar ist,
wobei mittels der Siebeinrichtung (1) abgelöste Früchte von Pflanzenresten trennbar sind,
**dadurch gekennzeichnet, dass**
die Siebeinrichtung (1) gemäß mindestens einem der Ansprüche 1 bis 10 ausgebildet ist.

12. Erntemaschine (24) nach Anspruch 11, **dadurch gekennzeichnet, dass** eine Längsachse (12) der Stelleinrichtung (4) parallel zu einer eine Längsachse (23) der Erntemaschine (24) beinhaltenden Längsebene der Erntemaschine (24) orientiert ist.

13. Erntemaschine (24) nach Anspruch 11 oder 12, **gekennzeichnet durch** zwei übereinander angeordnete Siebeinrichtungen (1), wobei beide Siebeinrichtung (1) gemäß mindestens einem der Ansprüche 1 bis 10 ausgebildet sind.

## Claims

1. A sieve device (1) for a harvester (24), in particular for a combine harvester, in particular for separating loose crops from plant residues, the sieve device (1) including
- at least one sieve frame (2),
- a plurality of slats (3) arranged on the sieve frame (2), and
- at least one adjusting device (4) for adjusting slats (3),
wherein the slats (3) are arranged on the sieve frame (2) in such a way that they define passage cross-sections (5) for the passage of material therethrough from a top side (6) of the sieve device (1) towards the underside (7) thereof,
wherein at least a majority of the slats (3) cooperates with the adjusting device (4) in such a way that sieve positions of the slats (3) are variable, wherein the passage cross-sections (5) are different when the slats (3) are in different sieve positions,
wherein the adjusting device (4) includes at least one motor (8) and at least one transmission member (9), by means of which drive power of the motor (8) can be transmitted to the slats (3) cooperating with the adjusting device (4) so that the sieve positions of the slats (3) are variable,
**characterised in that**
the adjusting device (4) includes a linear element (10) and a rotary element (13),
wherein the linear element (10) can be displaced in a translatory movement by means of the motor (8) and the translatory movement can be converted into a rotary movement of the rotary element (13) by means of the action of thread portions (14, 15) of complementary configuration of the linear element (10) and the rotary element (13) so that the rotary element (13) rotates about an axis of rotation (11) parallel to a longitudinal axis (12) of the adjusting device (4).

2. A sieve device (1) according to claim 1 **characterised in that** the transmission member (9) includes
- at least one pivotal element (41) extending radially beyond the axis of rotation (11) of the rotary element (13),
- at least one transmission rod (39) connected to the pivotal element (41),
- at least one pivotal lever (42) cooperating pivotably with the transmission rod (39), and
- at least one linearly displaceably mounted adjusting rail cooperating with the pivotal lever (42),
wherein the pivotal element (41) cooperates non-rotatably with the rotary element (13) and the transmission rod (39) is connected to the pivotal element (41) in such a way that a rotation of the pivotal element (41) causes an at least partial translatory movement of the transmission rod (39), wherein the movement of the transmission rod (39) is suitable for causing a pivotal movement of the pivotal lever (42) about the pivot axis thereof, which in turn by means of transmission to the adjusting rail causes a linear movement of the adjusting rail which is suitable for varying the sieve positions of the slats by means of coupling to at least a majority of the slats (3), preferably all slats (3).

3. A sieve device (1) according to claim 1 or claim 2 **characterised in that** the linear element (10) is formed by a hollow rod which has a recess (16) extending at least over a part of its length, wherein preferably the thread portion (14) of the linear element (10) is in the form of a female thread at an inside peripheral surface of the recess (16).

4. A sieve device (1) according to claim 3 **characterised in that** the rotary element (13) is formed by an elongated threaded rod which at its outside peripheral surface has a male thread which forms the thread portion (15) and which is suitable for meshing with the thread portion (14) of the linear element (10), that is in the form of the female thread.

5. A sieve device (1) according to claim 4 **characterised in that** a diameter of the rotary element (13) in the form of the threaded rod is at least 15 mm, preferably at least 20 mm, further preferably at least 25 mm.

6. A sieve device (1) according to one of claims 1 to 5 **characterised in that** the thread portion (15) of the rotary element (13) has a thread with a pitch of at least 50 mm, preferably at least 60 mm, further preferably at least 70 mm.

7. A sieve device (1) according to one of claims 1 to 6 wherein the sieve frame (2) is of a rectangular shape, wherein preferably a length (18) of the sieve frame (2) exceeds its width (19), **characterised in that** the longitudinal axis (12) of the adjusting device (4) is oriented parallel to a longitudinal side (20) of the sieve frame (2).

8. A sieve device (1) according to one of claims 1 to 7 **characterised in that** the adjusting device (4) is arranged in a central region of the sieve device (1), wherein preferably the adjusting device (4) cooperates with slats (3) of two sieve fields (21, 22) of the sieve device (1), wherein the sieve fields (21, 22) are respectively arranged on a side of the adjusting device (4).

9. A sieve device (1) according to claim 8 wherein the sieve frame (2) has a central profile member (29) which subdivides the sieve frame (2) into the two sieve fields (21, 22), **characterised in that** the adjusting device (4) cooperates with the central profile member (29) and in particular is arranged within the central profile member (29).

10. A sieve device (1) according to one of claims 1 to 9 **characterised in that** a width of the adjusting device (4), measured perpendicularly to a longitudinal axis (12) of the adjusting device (4), is at a maximum 60 mm, preferably at a maximum 50 mm, further preferably at a maximum 40 mm.

11. A harvester (24), in particular a self-propelled combine harvester for harvesting grain, including
- at least one cutting unit (25) for cutting plants to be harvested by means of the harvester (24),
- at least one conveyor member (29) for conveying the cut plants,
- at least one elongate threshing member (27) drivable in rotation about an axis of rotation, and
- at least one turning drum (28) which can be driven in rotation about an axis of rotation,
wherein the cut plants can be conveyed to the threshing member (27) by means of the conveyor member (26),
wherein crops can be detached from the cut plants by means of the threshing member (27) in such a way that the crops are then present detached from plant residues of the cut plants,
wherein a material flow issuing from the threshing member (27) and containing both loose crops and also plant residues can be transferred by means of the turning drum (28) to at least one downstream-disposed sieve device (1),
wherein detached crops can be separated from plant residues by means of the sieve device (1),
**characterised in that**
the sieve device (1) is in accordance with at least one of claims 1 to 10.

12. A harvester (24) according to claim 11 **characterised in that** a longitudinal axis (12) of the adjusting device (4) is oriented parallel to a longitudinal plane of the harvester (24), that contains a longitudinal axis (23) of the harvester (24).

13. A harvester (24) according to claim 11 or claim 12 **characterised by** two mutually superposed sieve devices (1), wherein both sieve devices (1) are in accordance with at least one of claims 1 to 10.

## Revendications

1. Équipement de tamisage (1) pour une machine de récolte (24), en particulier pour une moissonneuse-batteuse, en particulier pour séparer des fruits en vrac de restes de plantes, l'équipement de tamisage (1) incluant
- au moins un cadre de tamis (2),
- une pluralité de lamelles (3) qui sont disposées sur le cadre de tamis (2), ainsi que
- au moins un équipement de réglage (4) pour déplacer les lamelles (3),
les lamelles (3) étant disposées sur le cadre de tamis (2) de façon à limiter les sections de passage (5) pour le passage de produit depuis un dessus (6) de l'équipement de tamisage (1) jusqu'à son dessous (7),
au moins une majorité des lamelles (3) coopérant avec l'équipement de réglage (4) de façon que les positions de tamisage des lamelles (3) soient modifiables, les sections de passage (5) étant différentes lorsque les lamelles (3) se trouvent dans des positions de tamisage différentes,
l'équipement de réglage (4) incluant au moins un moteur (8) ainsi qu'au moins un organe de transmission (9) au moyen duquel une puissance d'entraînement du moteur (8) est transmissible aux lamelles (3) coopérant avec l'équipement de réglage (4), de façon que les positions de tamisage des lamelles (3) soient modifiables,
**caractérisé en ce que**
l'équipement de réglage (4) comprend un élément linéaire (10) ainsi qu'un élément rotatif (13), l'élément linéaire (10) pouvant être mis en mouvement translatif au moyen du moteur (8) et le mouvement translatif étant convertible en un mouvement rotatif de l'élément rotatif (13) par l'action de portions filetées de conception complémentaire (14, 15) de l'élément linéaire (10) ainsi que de l'élément rotatif (13), de sorte que l'élément rotatif (13) tourne autour d'un axe de rotation (11) parallèle à l'axe longitudinal (12) de l'équipement de réglage (4).

2. Équipement de tamisage (1) selon la revendication 1, **caractérisé en ce que** l'organe de transmission (9) inclut
- au moins un élément pivotant (41) s'étendant radialement au-delà de l'axe de rotation (11) de l'élément rotatif (13),
- au moins une barre de transmission (39) reliée à l'élément pivotant (41),
- au moins un levier pivotant (42) coopérant à pivotement avec la barre de transmission (39) ainsi que
- au moins un rail de réglage coopérant avec le levier pivotant (42) et monté avec une possibilité de déplacement linéaire,
l'élément pivotant (41) coopérant avec l'élément rotatif (13) de manière solidaire en rotation et la barre de transmission (39) étant reliée à l'élément pivotant (41) de façon qu'une rotation de l'élément pivotant (41) provoque un mouvement au moins en partie translatif de la barre de transmission (39), le mouvement de la barre de transmission (39) étant apte à provoquer un mouvement pivotant du levier pivotant (42) autour de son axe de pivotement, lequel provoque à son tour, au moyen d'une transmission au rail de réglage, un mouvement linéaire du rail de réglage, lequel est apte, au moyen d'un couplage avec au moins une majorité des lamelles (3), de préférence avec toutes les lamelles (3), à modifier les positions de tamisage de celles-ci.

3. Équipement de tamisage (1) selon la revendication 1 ou 2, **caractérisé en ce que** l'élément linéaire (10) est formé par une barre creuse qui comporte un évidement (16) s'étendant au moins sur une partie de sa longueur, de préférence la portion filetée (14) de l'élément linéaire (10) étant conçue sous la forme d'un filet intérieur sur la surface latérale intérieure de l'évidement (16).

4. Équipement de tamisage (1) selon la revendication 3, **caractérisé en ce que** l'élément rotatif (13) est formé par une barre filetée allongée qui comporte, sur sa surface latérale extérieure, un filet extérieur qui forme sa portion filetée (15) et qui est apte à s'engrener avec la portion filetée (14) de l'élément linéaire (10) conformée en filet intérieur.

5. Équipement de tamisage (1) selon la revendication 4, **caractérisé en ce qu'**un diamètre de l'élément rotatif (13) conformé en barre filetée est d'au moins 15 mm, de préférence d'au moins 20 mm, plus préférentiellement d'au moins 25 mm.

6. Équipement de tamisage (1) selon une des revendications 1 à 5, **caractérisé en ce que** la portion filetée (15) de l'élément rotatif (13) comporte un filet avec un pas d'au moins 50 mm, de préférence d'au moins 60 mm, plus préférentiellement d'au moins 70 mm.

7. Équipement de tamisage (1) selon une des revendications 1 à 6, le cadre de tamis (2) présentant une forme rectangulaire, de préférence une longueur (18) du cadre de tamis (2) excédant sa largeur (19), **caractérisé en ce que** l'axe longitudinal (12) de l'équipement de réglage (4) est orienté parallèlement à un côté longitudinal (20) du cadre de tamis (2).

8. Équipement de tamisage (1) selon une des revendications 1 à 7, **caractérisé en ce que** l'équipement de réglage (4) est disposé dans une zone centrale de l'équipement de tamisage (1), de préférence l'équipement de réglage (4) coopérant avec des lamelles (3) de deux travées de tamis (21, 22) de l'équipement de tamisage (1), les travées de tamis (21, 22) étant disposées chacune sur un côté de l'équipement de réglage (4).

9. Équipement de tamisage (1) selon la revendication 8, le cadre de tamis (2) comportant un profilé central (29) qui divise le cadre de tamis (2) en les deux travées de tamis (21, 22), **caractérisé en ce que** l'équipement de réglage (4) coopère avec le profilé central (29), en particulier est disposé à l'intérieur du profilé central (29).

10. Équipement de tamisage (1) selon une des revendications 1 à 9, **caractérisé en ce qu'**une largeur de l'équipement de réglage (4) mesurée perpendiculairement à un axe longitudinal (12) de l'équipement de réglage (4) est de maximum 60 mm, de préférence de maximum 50 mm, plus préférentiellement de maximum 40 mm.

11. Machine de récolte (24), en particulier une moissonneuse-batteuse automotrice pour récolter des céréales, incluant :
- au moins un tablier de coupe (25) pour couper des plantes à récolter au moyen de la machine de récolte (24),
- au moins un organe d'amenée (26) pour amener les plantes coupées,
- au moins un organe de battage allongé (27) entraîné en rotation autour d'un axe de rotation, ainsi que
- au moins un tire-paille (28) entraîné en rotation autour d'un axe de rotation,
les plantes coupées pouvant être amenées à l'organe de battage (27) au moyen de l'organe d'amenée (26),
des fruits pouvant être détachés des plantes coupées au moyen de l'organe de battage (27), de façon que les fruits soient ensuite débarrassés des restes de plantes des plantes coupées,
un flux de produit provenant de l'organe de battage (27) et contenant aussi bien des fruits en vrac que des restes de plantes pouvant être transmis à au moins un équipement de tamisage disposé en aval (1) au moyen du tire-paille (28), des fruits détachés pouvant être séparés de restes de plantes au moyen de l'équipement de tamisage (1),
**caractérisée en ce que**
l'équipement de tamisage (1) est conçu selon au moins une des revendications 1 à 10.

12. Machine de récolte (24) selon la revendication 11, **caractérisée en ce qu'**un axe longitudinal (12) de l'équipement de réglage (4) est orienté parallèlement à un plan longitudinal de la machine de récolte (24) contenant un axe longitudinal (23) de la machine de récolte (24).

13. Machine de récolte (24) selon la revendication 11 ou 12, **caractérisée par** deux équipements de tamisage disposés l'un au-dessus de l'autre (1), les deux équipements de tamisage (1) étant conçus selon au moins une des revendications 1 à 10.
